# EUROPEAN PATENT APPLICATION

(11) **EP 2 026 563 A1**
(43) Date of publication of application: **18.02.2009**
(21) Application number: 07114355.6
(22) Date of filing: 14.08.2007
(51) Int. Cl.: H04N 5/217, H04N 9/09

(54) **System and method for detecting defective pixels**

(71) Applicant: Deutsche Thomson OHG, 30625 Hannover (DE)
(72) Inventor: Thébault, Cédric, 78050, VS-Villingen (DE); Correa, Carlos, 78056, VS-Schwenningen (DE)
(74) Representative: Lindemann, Robert

(57) **Abstract**

Exemplary embodiments of the present invention relate to a method for identifying defective pixels in an imaging device (100). The method comprises identifying a main direction (302, 304, 306, 308) in which color pixel values of a first grid of pixels and at least a second grid of pixels differ the least with respect to other directions, the first grid of pixels comprising a first color pixel (204) surrounded by a plurality of neighboring pixels and the at least a second grid of pixels comprising a second color pixel (226, 228) of another color component relative to the first pixel surrounded by a plurality of neighboring pixels. The method further comprises determining whether the first color pixel (204) or the second color pixel (226, 228) is defective based on comparisons of variation between color values in the main direction in the first grid relative to color values in the main direction in the second grid.

## Description

The present invention relates to the detection of defective pixels in video imaging devices.

It is well-known that a CMOS imager chip consists of an array of pixel cells, each comprising a photo diode and a readout circuit. Each CMOS pixel generates an electrical signal depending on the amount of light impinging upon the pixel. This electrical signal is typically converted into digital value by an analog to digital converter.

CMOS sensor arrays can be manufactured using a standard CMOS process. Such a process allows other circuits to be integrated on a single chip. Examples of additional circuitry that can be included are analog-to-digital converters (ADC), digital controllers for read-out from the CMOS sensor, digital signal processing cores for signal post-processing or the like.

Although CMOS image sensors use low supply voltages and can be fabricated at low cost, they typically provide reduced performance compared to charge-coupled device (CCD) imagers. One reason for this reduced performance is that CMOS image sensors suffer from fixed pattern noise and randomly positioned defective pixels. Random pixel defects generated during CMOS wafer manufacturing tend to limit the percentage of devices that are usable as image sensors. In other words, an image sensor that has too many defective pixels may have to be discarded because of quality and performance standards. However, for economic reasons and in order to increase the manufacturing yield, some random defective pixels are typically accepted even in image sensors used for professional devices such as television cameras. It is desirable to detect defective pixels and correct the video information provided by those pixels using signal processing techniques, if possible.

Pixel defects in an imager are seen as spot noise. In a CMOS image sensor, white spots on a dark portion of an image are caused by pixels with excessive leakage current and the dark spots on a white portion of the image are caused by either a particle covering the pixel or a defect in the pixel electronics causing the pixel to be insensitive. Defective pixels are mainly created during manufacturing, but some pixels become defective over time. Spot noise caused by defective pixels strongly degrades image quality. Accordingly, a system and method of detecting defective pixels is desirable.

U.S. Patent No. 6,965,395 to Neter discloses methods and systems for detecting defective imaging array pixels and providing correction, thereby reducing or eliminating visible image artifacts. One embodiment of the alleged invention provides an on-line bad pixel detection and correction process that compares a first pixel readout value with a first value related to the readout values of other pixels in first pixel's local neighborhood. When the first pixel readout value varies by more than a first amount as compared with the first value, a second value related to the readout values of the neighboring pixels is used in place of the first pixel readout value.

U.S. Patent Publication No. 20050243181 to Castello, et al. discloses a real-time pixel correction algorithm for on-the-fly repair of pixel information from dead or disturbed pixels from a pixel array. The algorithm is applicable to both CCD and CMOS imagers. The method relates to the detection of erroneous image sample data of defective image samples from a plurality of image sample data. A first image sample data is assigned to a first color and at least a second number of image sample data is assigned to a second color. An image sample data under test is tested with respect to further image sample data and a first kind of test is performed with respect to a further image sample data assigned to the same color as that to which the image sample data under test is assigned. Further, a second kind of test is performed with respect to another image sample data assigned to a different color than that to which the image sample data under test is assigned.

U.S. Patent Publication No. 20040201758 to Sasaki discloses a system in which first pixel data of a pixel of interest is output from a first shift register, while second and third pixel data of neighboring pixels indicative of the same color are output from second and third shift registers, respectively. Differential data between estimated pixel data calculated from the second and third pixel data and the first pixel data is input to a comparator. A threshold value stored in a register is modulated by the estimated pixel data, and is input to the comparator as modulated threshold data. When the comparator judges that the differential data is greater than the modulated threshold data, a selector outputs the estimated pixel data as corrected pixel data.

U.S. Patent No. 7,129,975 to Levine, et al. discloses a video imaging system that includes an imaging array having a plurality of picture elements (pixels) formed in a substrate. An analog-to-digital converter formed in the substrate converts signals from the pixels into digital pixel signals. A defect detection circuit formed in the substrate provides a defective pixel output signal indicating, as the digital pixel signal corresponding to the pixels is processed, if any one pixel of the plurality of pixels in the imaging array is defective. The video imaging system includes a defect substitution circuit, also formed in the substrate, that substitutes a corrected pixel for any defective pixel. The video imaging system is responsive to a gain control signal to adjust the pixels in magnitude. The gain control signal is applied to the first circuit to control the analysis of the pixel to determine if it is defective.

U.S. Patent No. 5,436,659 to Vincent discloses an application-specific integrated circuit (ASIC) that is programmable for provision of timing and control of imaging signals, including genclock and defective pixel correction function. The ASIC stores information regarding the existence of a next closely spaced defective pixel as the least significant bits of an n-bit words address of a previous defective pixel and compares only the X location information for the next pixel.

U.S. Patent Publication No. 20040080636 to Dong discloses a MOS imaging array in which dead pixels may occur. If the cell of the pixel has a defect in its PN junction, it may generate current leakage paths, thus causing the cell site to appear as a white spot in the image signal. The system corrects for dead pixels with circuitry that may be fabricated on a single integrated MOS chip. When the MOS imaging device is first turned on, the pixel signals from the cell array are read out and a dead pixel determination method is used to determine dead pixels. A digital referencing scheme is used such that when a dead pixel is located, its digital location is stored in a designated storage area. Then normal data image signal processing begins, with the location of each pixel that is being read out being monitored. When a pixel with a location that corresponds to the stored location for a dead pixel is read out, the signal processing circuitry compensates for the pixel signal rather than providing it as part of the normal image signal. One method by which the signal processing circuitry may compensate for the dead pixel signal is to repeat the signal from the pixel that was read out immediately prior to the dead pixel.

The publication "A Robust Sequential Approach for the Detection of Defective Pixels in an Image Sensor," Tang, Yap-Peng and Acharya, T., INSPEC Accession No. 6370485, March 15-19, 1999, discloses an allegedly robust sequential approach for detecting sensor defects from a sequence of images captured by the sensor. With this approach no extra non-volatile memory is required in the sensor device to store the locations of sensor defects. In addition, the detection and correction of image defective outputs can be performed efficiently in a computer host.

The publication "Robust Detection of Defects in Imaging Arrays," Dudas, Jozsef; Jung, Cory; Chapman, Glenn H.; Koren, Zahava; and Koren, Israel, SPIE Volume 6059, January 17, 2006, discloses that some traditional schemes for defect detection utilize specialized hardware at the time of manufacture and are impractical for use in the field, while previously proposed software-based approaches tend to lead to quality-degrading false positive diagnoses. The publication suggests an algorithm that utilizes statistical information extracted from a sequence of normally captured images to identify the location and type of defective pixels. Building on previous research, this algorithm utilizes data local to each pixel and Bayesian statistics to more accurately infer the likelihood of each defect, which allegedly improves the detection time. Several defect types are considered, including pixels with one-half of the typical sensitivity and permanently stuck pixels. Monte Carlo simulations have shown that for defect densities of up to 0.5%, 50 ordinary images are sufficient to accurately identify all faults without falsely diagnosing good pixels as faulty. Testing also indicates that the algorithm can be extended to higher resolution imagers and to those with noisy stuck pixels, with only minimal cost to performance.

Preferably, exemplary embodiments of the present invention provide a system and method that effectively detects defective pixels in an imager. Such detection facilitates correction of defective video data and results in improved quality in the appearance of displayed images captured by an imager employing an exemplary embodiment of the present invention.

A method in accordance with an exemplary embodiment of the present invention is set forth in claim 1. The exemplary method identifies defective pixels in an imaging device. The method comprises identifying a main direction (302, 304, 306, 308) in which color pixel values of a first grid of pixels and at least a second grid of pixels differ the least with respect to other directions, the first grid of pixels comprising a first color pixel (204) surrounded by a plurality of neighboring pixels and the at least a second grid of pixels comprising a second color pixel (226, 228) of another color component relative to the first pixel surrounded by a plurality of neighboring pixels. The method additionally comprises determining whether the first color pixel (204) or the second color pixel (226, 228) is defective based on comparisons of variation between color values in the main direction in the first grid relative to color values in the main direction in the second grid.

In one exemplary embodiment of the invention, the first grid and the at least a second grid each comprises a 3x3 pixel grid. In another exemplary embodiment, the main direction comprises a vertical direction, a horizontal direction, a first diagonal direction or a second diagonal direction. A color value associated with a color pixel that is determined to be defective may be pre-corrected. Additionally, a color pixel that is determined to be defective may be corrected.

A video imaging device in accordance with an exemplary embodiment of the present invention is set forth in claim 6. The exemplary video imaging device comprises a first image sensor that is adapted to receive image data, the first image sensor having a first grid of pixels that comprises a first color pixel surrounded by a plurality of neighboring pixels and an at least a second image sensor that is adapted to receive image data, the second image sensor having a second grid of pixels that comprises a second color pixel of another color component relative to the first pixel surrounded by a plurality of neighboring pixels. The video imaging device further comprises a main direction detection block that is adapted to identify a main direction corresponding to a direction in which color pixel values of the first grid and the at least a second grid differ the least with respect to other directions. Finally, the video imaging device comprises a defective pixel decision making block that is adapted to determine whether the first color pixel or the second color pixel is defective based on comparisons of variation between color values in the main direction in the first grid relative to color values in the main direction in the second grid.

Fig. 1 is a block diagram of a digital video camera system in accordance with an exemplary embodiment of the present invention.

FIG. 2 is a graph useful in explaining the operation of a defective pixel detection and correction circuit in accordance with an exemplary embodiment of the present invention.

FIG. 3 is a diagram showing examples of directions that may be considered in performing direction optimized defective pixel detection in accordance with an exemplary embodiment of the present invention.

FIG. 4 is a block diagram of a defective pixel detection and correction block in accordance with an exemplary embodiment of the present invention.

FIG. 5 is a block diagram of an exemplary defective pixel detection block in accordance with an exemplary embodiment of the present invention.

FIG. 6 is a block diagram of an exemplary defective pixel detection block in accordance with an exemplary embodiment of the present invention.

FIG. 7 is a block diagram of a main direction decision block in accordance with an exemplary embodiment of the present invention.

FIG. 8 is a block diagram of a vertical pixel comparison block in accordance with an exemplary embodiment of the present invention.

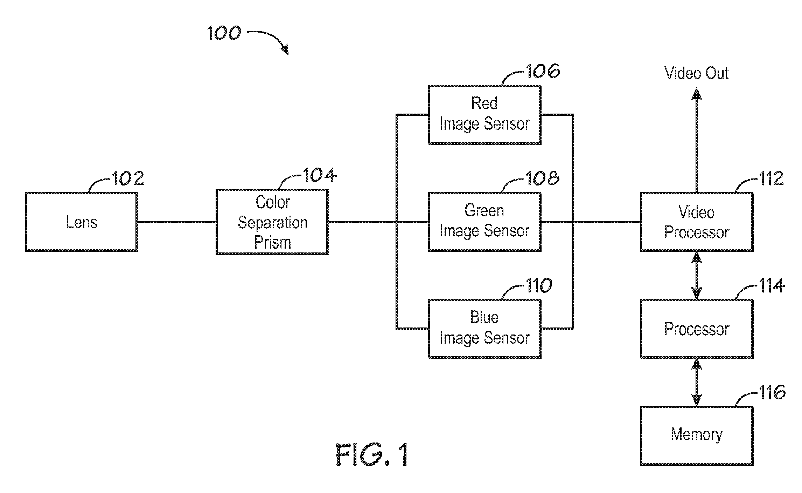

FIG. 1 shows an exemplary digital video camera system 100 in accordance with an exemplary embodiment of the present invention. The skilled person will appreciate that the functional blocks shown in FIG. 1 may comprise hardware elements (including circuitry), software elements (including computer code stored on a machine-readable medium) or a combination of both hardware and software elements.

The camera system 100 comprises a lens 102. A color separation prism 104 receives light directed to it by the lens 102 and separates the light into three color components: a red component, a green component and a blue component. The red color component is directed to a red image sensor 106. The green color component is directed to a green image sensor 108. The blue color component is directed to a blue image sensor 110. The operation of the red image sensor 106, the green image sensor 108 and the blue image sensor110 with respect to the detection of defective pixels is set forth in detail below.

The outputs of the red image sensor 106, the green image sensor 108 and the blue image sensor 110 are delivered to a video processor 112. Under control of a system processor 114, the video processor 112 produces a video output signal corresponding to a series of images captured by the image sensors.

The skilled person will appreciate that the system processor 114 controls the overall operation of the camera system 100. A memory 116 is operably coupled to the system processor 114. The skilled person will appreciate that the memory 116 is illustrated as a single block in FIG. 1 for purposes of simplicity. In fact, the memory 116 may comprise volatile memory portions and non-volatile memory portions that each performs different functions. For example, a volatile memory portion of the memory 116 may store computer-readable instructions that cause the system processor 114 to control the overall operation of the camera system 100. In addition, a non-volatile memory portion of the memory 116 may store video images recorded by the camera system 100 for later display.

As set forth above, exemplary embodiments of the present invention are adapted to minimize the effect of defective pixels in a CMOS image sensor, such as the red image sensor 106, the green image sensor 108 or the blue image sensor 110. In particular, an exemplary embodiment of the present invention is directed to the detection of video data information that is provided by a pixel that is in fact defective. Correction of the video data from the defective pixel may then be performed, with an improvement in image quality.

An exemplary embodiment of the present invention is adapted to operate in an imager that has isolated individual defective pixels. Moreover, an exemplary embodiment of the present invention may operate under an assumption that each defective pixel detected is adjacent to only pixels that are functioning properly. By comparing pixel information for a neighborhood of adjacent pixels with the information for a pixel being evaluated, it will be possible to detect defective pixels. As explained in detail below, an exemplary embodiment of the present invention employs a direction-optimized detection focusing on four directions from which a main direction is selected.

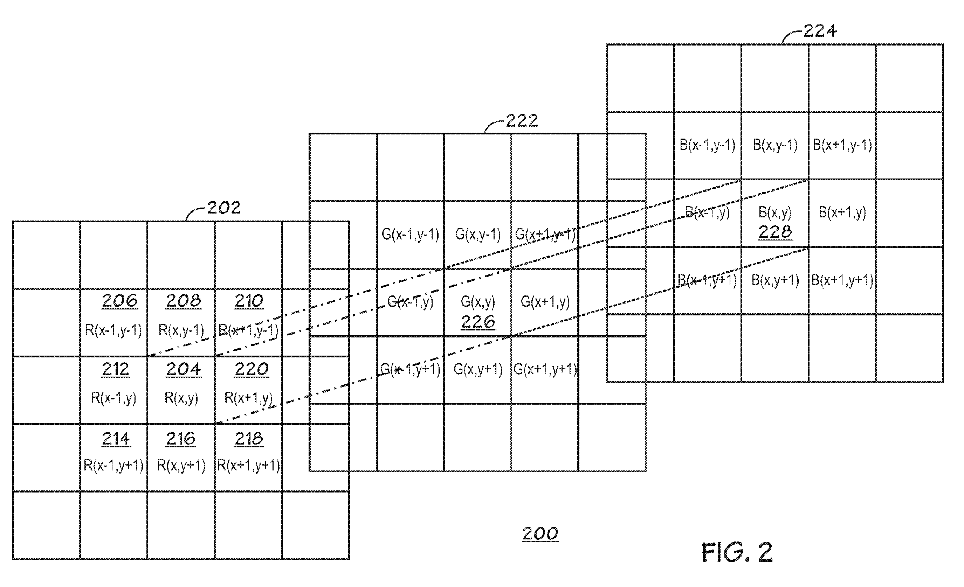

FIG. 2 is a graph useful in explaining the operation of a defective pixel detection circuit in accordance with an exemplary embodiment of the present invention. The graph is generally referred to by the reference number 200. The graph depicts a portion of the pixel grid of each of the three imagers described in FIG. 1. In particular, a red grid portion 202 represents a portion of the pixel grid of the red imager 106. A green grid portion 222 represents a portion of the pixel grid of the green imager 108. A blue grid portion 224 represents a portion of the pixel grid of the blue imager 110.

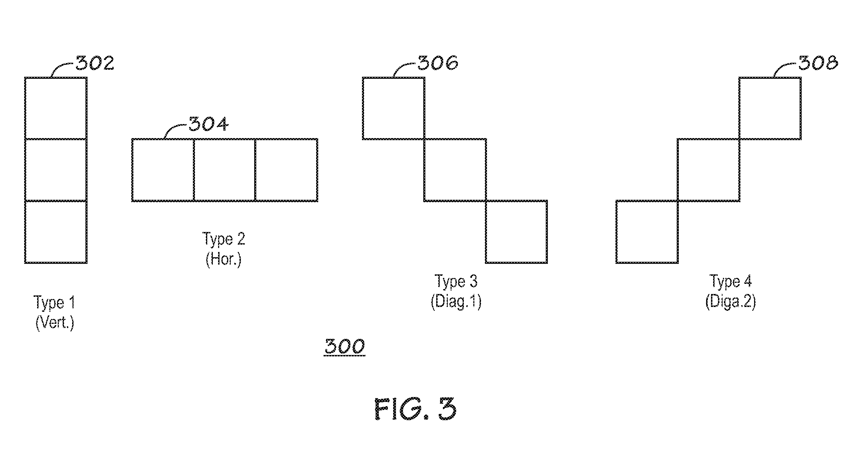

As set forth above, an exemplary embodiment of the present invention operates under the assumption that each defective color pixel is surrounded by pixels that operate properly. In FIG. 2, a potentially defective pixel comprises information made up from a potentially defective red color pixel 204, a potentially defective green color pixel 226 and a potentially defective blue color pixel 228. The potentially defective red color pixel 204 is assumed to be surrounded by a 3x3 matrix or grid of eight neighboring red pixels 206, 208, 210, 212, 214, 216, 218 and 220, a matrix of nine neighboring green pixels and a matrix of nine neighboring blue pixels, which are assumed to operate correctly. In FIG. 2, the potentially defective red pixel 204 is identified on a coordinate grid as being located at a position of R(x,y). In an exemplary embodiment of the present invention, information about the potentially defective red pixel 204, information about all of the eight neighboring red pixels 206, 208, 210, 212, 214, 216, 218 and 220, information about all of the nine neighboring green pixels and information about all of the nine neighboring blue pixels shown in FIG. 2 is used in determining whether the pixel containing information from the potentially defective red pixel 204 is in fact defective. As shown in FIG. 2, and as will be appreciated by the skilled person, each 3x3 pixel block comprises nine pixels, including the center pixel. The following discussion regarding FIG. 3 is useful in explaining the determination of a main direction corresponding to a direction in which color pixel values differ the least with respect to other directions. The main direction is used to identify defective pixels in accordance with an exemplary embodiment of the present invention.

FIG. 3 is a diagram showing examples of directions that may be considered in performing direction optimized defective pixel detection in accordance with an exemplary embodiment of the present invention. The diagram is generally referred to by the reference number 300. Each of the four directions is shown using an exemplary pattern of three pixels. A vertical direction is represented by a pixel pattern 302 (Type 1). A horizontal direction is represented by a pixel pattern 304 (Type 2). A first diagonal direction is represented by a pixel pattern 306 (Diag. 1) and a second diagonal direction is represented by a pixel pattern 308 (Diag. 2).

Because information about neighboring pixels is used to determine whether a given pixel is defective, an exemplary embodiment of the present invention operates under an assumption that, at most, one color pixel is defective in every 3x3 pixel block. This is true because defective neighboring pixels can interfere with the estimation of the defectiveness of the middle pixel.

As set forth above, the camera system 100 employs one image sensor per color. An advantage provided by such a design is that there is usually some degree of similarity between the information from the three color components of an image. Indeed, it is seldom to have pure saturated color and therefore, information is proportionally given in all three color components. This means that the degree of similarity of information being received for corresponding pixels from the three different imagers (the red image sensor 106, the green image sensor 108 and the blue image sensor 110) can be relevant to a determination of whether a pixel is defective.

For example, the determination of whether the potentially defective red pixel 204 (FIG. 2) is actually defective may take into consideration information about a corresponding green pixel 226 (FIG. 2) and/or a corresponding blue pixel 228 (FIG. 2), and their respective neighboring pixels. The determination of the main direction may be done by taking into account that one of the three color pixels could be defective. This means that, for each direction and for each color, a comparison could be made of the values of eight color pixels. Then, the difference values for all colors in all directions could be compared. The smallest difference value of all the color-direction combinations could be taken to represent the main direction for purposes of defective color pixel determination. An exemplary embodiment of the present invention may operate under an assumption that, if a pixel being evaluated is defective, that none of its neighboring pixels or the corresponding pixels from the other color imagers (and their respective neighboring pixels) are defective.

The following example explains how pixel data for 27 color pixels (a center pixel for each of three colors plus eight neighboring pixels for each of the center pixels) may be used to determine a main direction in accordance with an exemplary embodiment of the present invention. In the following example, the label "X" is used to refer to pixels generally, the label "R" refers to red color pixels, the label "G" refers to green color pixels and the label "B" refers to blue color pixels.

For each direction (for example, the horizontal direction 304) represented by three pixels X1, X2 and X3 (X2 being the central pixel), and for each color (red for example), the pixel values of eight color pixels R1, R3, G1, G2, G3, B1, B2, B3 are compared. Moreover, the value of R2 is not considered because it is under evaluation and could be defective. In this manner, a value for red in the horizontal direction 304 (call it HR - H for horizontal and R for red) is obtained. Next, the smallest value between HR, a value for green in the horizontal direction 304 (HG) and a value for blue in the horizontal direction 304 (HB) is determined to represent the value for the horizontal direction 304 (value H). Finally, the similarly-calculated value for each remaining direction (the vertical direction 302, the first diagonal direction 306 and the second diagonal direction 308 - call these values V, D1 and D2 respectively) are compared to decide which direction is the main direction. The main direction is then used to determine whether any of the color pixels R2 (204), G2 (226) or B2 (228) is defective.

To determine whether a color pixel is defective, a comparison is made with respect to the variations of the pixel values in each of the color components in the main direction to check if one color has a different variation than the others. In an exemplary embodiment of the present invention, it may be accepted that more than one color component may be decreasing while another one is increasing, but it is not accepted that a middle pixel has a significantly higher or smaller value than its two neighbors (in the same color component) while in the other color components the middle pixels have values between the pixel values of their two neighbors. In the latter case, the middle pixel is likely to be marked as defective. An exemplary embodiment of the present invention may further operate under the presumption that the opposite is also true: if in one color component of a pixel value of the center pixel is between the pixel values of its two neighbors, while in the two other color components the center pixels have a pixel value significantly higher or smaller than their neighbors, then the color pixel of the first color component will most probably be marked as defective.

Thus, an exemplary embodiment of the present invention may be adapted to determine whether color pixels are defective based on comparisons of variation between color values in the main direction in a first color grid relative to color values in the main direction of a second color grid corresponding to a different color component. The skilled person will appreciate that specific pattern variations that are considered to correspond to defective color pixels may vary depending on system design requirements and performance assumptions. Further, an exemplary embodiment of the present invention may operate under an assumption that, if a pixel being evaluated is defective, that none of its neighboring pixels or the corresponding pixels from the other color imagers (and their respective neighboring pixels) are defective.

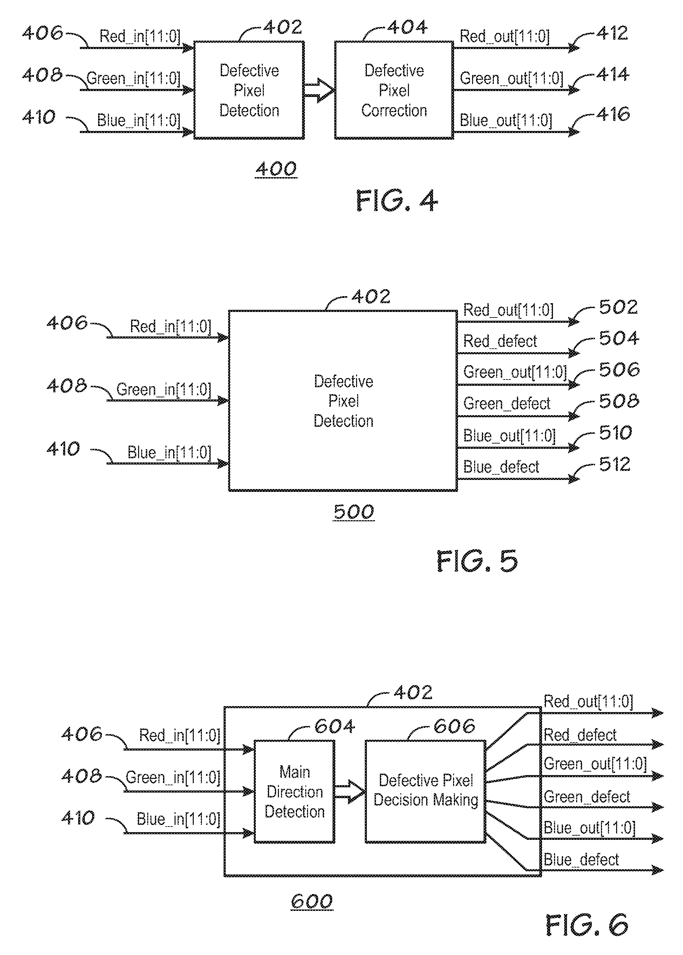

FIG. 4 is a block diagram of a defective pixel detection and correction block in accordance with an exemplary embodiment of the present invention. The circuit is generally referred to by the reference number 400. The defective pixel detection and correction circuit 400 comprises a defective pixel detection block 402 and a defective pixel correction block 404. The defective pixel detection block 402 receives an input from each of the imagers shown in FIG. 1. Specifically, the defective pixel detection block 402 receives a red input 406 from the red image sensor 106 (FIG. 1), a green input 408 from the green image sensor 108 (FIG. 1) and a blue input 410 from the blue image sensor 110 (FIG. 1).

The defective pixel detection block 402 provides information identifying defective pixels to the defective pixel correction circuit 404, which in turn corrects the color information associated with the defective pixels. The defective pixel correction circuit 404 produces a red output 412, a green output 414 and a blue output 416.

FIG. 5 is a block diagram of an exemplary defective pixel detection block 402 in accordance with an exemplary embodiment of the present invention. The exemplary defective pixel detection circuit 402 produces two items of information about each pixel processed. Specifically, the defective pixel detection circuit 402 produces a red color output 502, a red defective pixel signal 504, a green color output 506, a green defective pixel signal 508, a blue color output 510 and a blue defective pixel signal 512. The defective pixel signals 504, 508 and 512 are an indication of whether or not the defective pixel detection block 402 has determined that the associated color pixel is defective. For example, the defective signals 504, 508 and 512 may have a value of a logical "1" when the corresponding pixel has been determined to be defective and a value of a logical "0" otherwise.

In an exemplary embodiment of the present invention, the color information for a pixel that has been determined to be defective may be pre-corrected by the defective pixel detection block 402. This means that the color values for the defective pixels are replaced with other values corresponding to a simple correction. Pre-correction of color values avoids the use of defective color data by the defective pixel correction block 404. This is desirable because it is theoretically possible to have an output from the defective pixel detection block 402 indicating that neighboring pixels have been detected to be defective unless additional line memories are used.

FIG. 6 is a more detailed block diagram of an exemplary defective pixel detection block 402 in accordance with an exemplary embodiment of the present invention. The defective pixel detection block 402 comprises a main direction detection block 604 and a defective pixel decision making block 606. If a color transition is in progress in a given area of the pixel grid, the main direction will be parallel to the color transition.

In an exemplary embodiment of the present invention, the main direction detection block 604 divides the pixel grid of each of the three imagers into 3x3 blocks of pixels and evaluates a plurality of directions (for example, the directions described above with reference to FIG. 3) with respect to each 3x3 block to determine the main direction of each 3x3 block. The direction estimation logic for each direction may be the same, with the input data (i.e., which pixel is being compared) being different for each direction. As set forth above, the main direction detection block 604 may be adapted to determine a main direction by using color value data for each of the three color components.

Those of ordinary skill in the art will appreciate that it is likely to more accurately identify defective pixels when considering the main direction of each 3x3 block because, by definition, there are fewer differences between the pixel values in the main direction. In every direction considered, at most one defective color pixel is accepted. For every color pixel, the main direction detection block 604 generates a value representing the difference between a particular pixel and its neighbors in the given direction.

The defective pixel decision making block 606 decides which pixels are considered as defective based on the information received from the main direction detection block 604. As set forth above, an exemplary defective pixel decision making block 606 may be adapted to determine whether a pixel is defective by evaluating a pattern of variation between color values in the main direction of a first grid comprising a first color pixel 204 (FIG. 2) relative to color values in the main direction of at least a second grid comprising a second color pixel 226, 228 (FIG. 2). The defective pixel decision making block 606 may be adapted to provide pre-correction to data corresponding to color pixels determined to be defective, as described above.

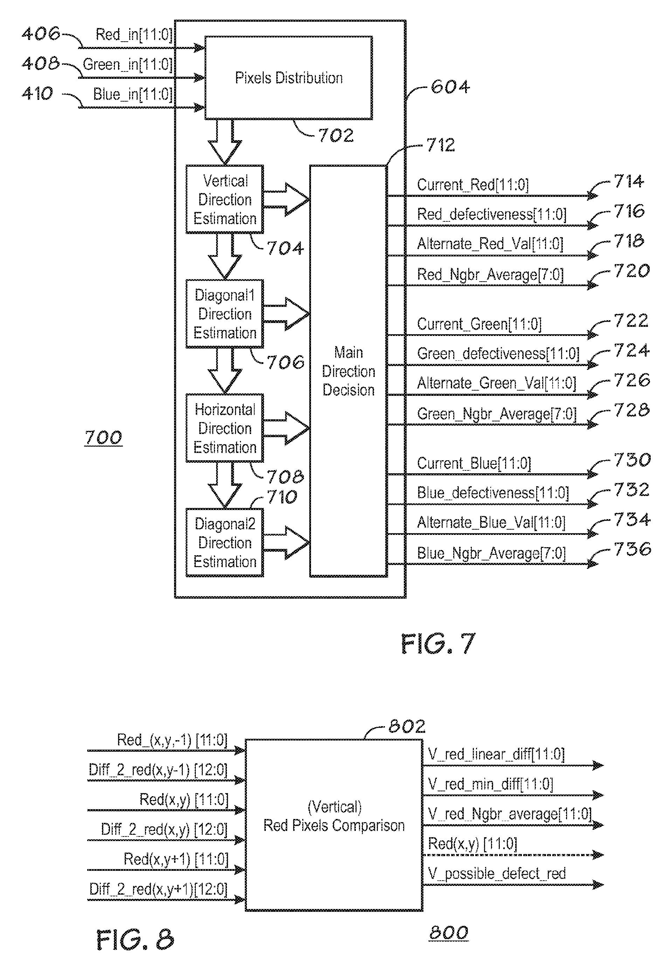

FIG. 7 is a detailed block diagram of the main direction decision block 604 in accordance with an exemplary embodiment of the present invention. The exemplary main direction decision block 604 shown in FIG. 7 comprises a pixel distribution block 702 that provides pixel information to a plurality of direction estimation blocks. In an exemplary embodiment of the present invention, the pixel distribution block 702 comprises two line memories, each being one line minus two pixels long.

Specifically, the pixel distribution block 702 provides input pixel values (and also differences between theses components) to a vertical direction estimation block 704, a first diagonal direction estimation block 706, a horizontal direction estimation block 708 and a second diagonal direction estimation block 710. Those of ordinary skill in the art will appreciate that the directions represented by the direction estimation blocks shown in FIG. 7 correspond to the four directions defined above with respect to FIG. 3. The direction estimation blocks 704, 706, 708 and 710 provide output to a main direction decision block 712.

In the exemplary embodiment shown in FIG. 7, the outputs from the main direction decision block 712 include four items of information regarding each pixel color. Those items are a current pixel value, a defectiveness value, an alternate value, and an average value of the neighboring pixels (relative to the current pixel). Thus, the specific outputs of the exemplary main direction decision block 712 are a current red value output 714, a red defectiveness value output 716, an alternate red value output 718, a red neighbor average value output 720, a current green value output 722, a green defectiveness value output 724, an alternate green value output 726, a green neighbor average value output 728, a current blue value output 730, a blue defectiveness value output 732, an alternate blue value output 734 and a blue neighbor average value output 736.

The current value outputs 714, 722 and 730 correspond to the input delayed by approximately one line. The defectiveness value outputs 716, 724 and 732 represent the difference between the value of the "current" pixel and the values of its neighbors. The alternate value outputs 718, 726 and 734 will be used to replace the value of the "current" pixel when the current pixel is detected as defective. The neighbor average value outputs 720, 728 and 736 represent average value of the neighbor pixels of the "current" pixel.

The main direction decision block 712 may comprise logic to make a relatively rough initial determination of a possible defective color. In an exemplary embodiment, a direction_possible_defect_color[1:0] signal is used to specify that a middle pixel could have defective color information. For example, a value of "0" could be used to indicate no defective color information has been detected. A value of "1" could be used to indicate a possibility of defective red pixel information. A value of "2" could be used to indicate a possibility of defective green pixel information. A value of "3" could be used to indicate a possibility of defective blue pixel information. In an exemplary embodiment, only one direction may be considered in determining a value for the direction_possible_defect_color[1:0] signal. This would not be meant to be a final decision, just a first indication.

FIG. 8 is a block diagram of a vertical pixel comparison block in accordance with an exemplary embodiment of the present invention. The diagram is generally referred to by the reference number 800. FIG. 8 shows an exemplary embodiment of a vertical red pixel comparison block 802. The skilled person will appreciate that an exemplary embodiment of the present invention that considers four directions for each of three colors would comprise 12 (4x3) pixel comparison blocks, one for each direction-color pair. In an exemplary embodiment of the present invention, the current pixel components are transmitted by its component_pixels_comparison blocks without change (only delay equalisation).

The skilled person will appreciate that combining any of the above-recited features of the present invention together may be desirable.

## Claims

1. A method for identifying defective color pixels in an imaging device (100), the method comprising:
- identifying a main direction (302, 304, 306, 308) in which color pixel values of a first grid of pixels and at least a second grid of pixels differ the least with respect to other directions, the first grid of pixels comprising a first color pixel (204) surrounded by a plurality of neighboring pixels and the at least a second grid of pixels comprising a second color pixel (226, 228) of another color component relative to the first pixel surrounded by a plurality of neighboring pixels; and
- determining whether the first color pixel (204) or the second color pixel (226, 228) is defective based on comparisons of variation between color values in the main direction in the first grid relative to color values in the main direction in the second grid.

2. Method for identifying defective color pixels in an imaging device (100) according to claim 1, wherein the first grid and the at least a second grid each comprises a 3x3 pixel grid.

3. Method for identifying defective color pixels in an imaging device (100) according to claims 1 or 2, wherein the main direction comprises a vertical direction (302), a horizontal direction (304), a first diagonal direction (306) or a second diagonal direction (308).

4. Method for identifying defective color pixels in an imaging device (100) according to any one of claims 1 to 3, comprising the step of:
- pre-correcting a color value of the first color pixel (204) if the first color pixel is determined to be defective or the second color pixel (226, 228) if the second color pixel (226, 228) is determined to be defective.

5. Method for identifying defective pixels in an imaging device (100) according to any one of claims 1 to 4, comprising the step of:
- correcting a color value of the first color pixel (204) if the first color pixel is determined to be defective or the second color pixel (226, 228) if the second color pixel (226, 228) is determined to be defective.

6. A video imaging device (100), comprising:
- a first image sensor (106) that is adapted to receive image data, the first image sensor (106) having a first grid of pixels that comprises a first color pixel (204) surrounded by a plurality of neighboring pixels;
- at least a second image sensor (108, 110) that is adapted to receive image data, the second image sensor (108, 110) having a second grid of pixels that comprises a second color pixel (226, 228) of another color component relative to the first pixel (204) surrounded by a plurality of neighboring pixels;
- a main direction detection block (604) that is adapted to identify a main direction (302, 304, 306, 308) corresponding to a direction in which color pixel values of the first grid and the at least a second grid differ the least with respect to other directions; and
- a defective pixel decision making block (606) that is adapted to determine whether the first color pixel (204) or the second color pixel (226, 228) is defective based on comparisons of variation between color values in the main direction in the first grid relative to color values in the main direction in the second grid.

7. The video imaging device (100) according to claim 6, wherein the first grid and the at least a second grid each comprises a 3x3 pixel grid.

8. The video imaging device (100) according to claims 6 or 7, wherein the main direction comprises a vertical direction (302), a horizontal direction (304), a first diagonal direction (306) or a second diagonal direction (308).

9. The video imaging device (100) according to any one of claims 6 to 8, wherein the defective pixel decision making block (606) is adapted to precorrect a color value of the first color pixel (204) if the first color pixel is determined to be defective or the second color pixel (226, 228) if the second color pixel (226, 228) is determined to be defective.

10. The video imaging device (100) according to any one of claims 6 to 9, comprising a defective pixel correction block (404) that is adapted to correct a color value of the first color pixel (204) if the first color pixel is determined to be defective or the second color pixel (226, 228) if the second color pixel (226, 228) is determined to be defective.
